# EUROPÄISCHE PATENTSCHRIFT

(11) **EP 2 527 273 B1**
(45) Veröffentlichungstag und Bekanntmachung des Hinweises auf die Patenterteilung: **02.09.2015**
(21) Anmeldenummer: 12002587.9
(22) Anmeldetag: 12.04.2012
(51) Int. Cl.: B65G 1/04

(54) **Wellpappe-Lagerung**
Corrugated cardboard storage
Stockage de carton ondulé

(30) Priorität: 27.05.2011 DE 102011103336
(43) Veröffentlichungstag der Anmeldung: 28.11.2012
(73) Patentinhaber: GaUp GmbH, 33829 Borgholzhausen (DE)
(72) Erfinder: Gartemann, Andreas, 49479 Ibbenbüren (DE)
(74) Vertreter: Wagner, Carsten

(56) Entgegenhaltungen:
- EP-A1- 1 435 333
- EP-A2- 0 609 757
- WO-A1-2008/136659

## Beschreibung

Die Erfindung betrifft eine Lageranordnung für Wellpappe-Stückguteinheiten gemäß dem Oberbegriff des Patentanspruchs 1. Eine Lageranordnung der eingangs genannten Art ist beispielsweise aus der EP-0-609 757 bekannt.

Die Herstellung von Wellpappe in industriellem Maßstab ist Sehr Vielseitig, da eine hohe Anzahl unterschiedlicher Artikel, beispielsweise in Form unterschiedlicher Wellpappezuschnitte oder -produkte, hergestellt wird. Aufgrund der in der Regel hohen Anzahl unterschiedlicher Produkte ergeben sich vielfältige Anforderungen an die Lagerlogistik, wenn Wellpappe-Stückguteinheiten automatisiert gelagert werden sollen.

Der Erfindung liegt die Aufgabe zugrunde, eine Lageranordnung für Wellpappe-Stückguteinheiten anzugeben, wobei die Lageranordnung die Einlagerung der Stückguteinheiten auf einfache und wirtschaftliche Weise ermöglichen soll.

Diese Aufgabe wird durch die im Kennzeichen des Patentanspruchs 1 aufgeführten Merkmale gelöst.

Eine vorteilhafte Weiterbildung der Erfindung sieht vor, daß sich steuerungstechnisch zusammengefaßte Kanalfahrzeuge beim Einfahren in einen bzw. beim Ausfahren aus einem Kanal im wesentlichen synchron bewegen.

Eine vorteilhafte Weiterbildung der Erfindung sieht vor, daß die Lageranordnung für eine mehrfachtiefe Lagerung ausgestaltet ist.

Aufbau und Anordnung von Regalen der Regalanordnung sind innerhalb weiter Grenzen wählbar. Eine vorteilhafte Weiterbildung der Erfindung sieht insoweit vor, daß jedes Regal entlang seiner Breitenausdehnung in eine Mehrzahl von Regalfächern unterteilt ist.

Eine andere vorteilhafte Weiterbildung der Erfindung sieht vor, daß wenigstens ein Teil der Regalfächer entlang seiner Breitenausdehnung in eine Mehrzahl von Kanälen unterteilt ist. Bei dieser Ausführungsform erstrecken sich die Kanäle quer zur Breitenausdehnung der Regalfächer, also entlang ihrer Tiefenausdehnung. Im Rahmen einer mehrfachtiefen Lagerung können in den einzelnen Kanälen entlang der Tiefenausdehnung hintereinander unterschiedliche Ladeeinheiten gelagert werden.

Eine andere vorteilhafte Weiterbildung der Erfindung sieht eine übergeordnete Steuerungseinrichtung vor, die für eine die gesamte Lageranordnung oder wenigstens Teilbereiche davon erfassende Optimierung der Steuerung von Ein- und Auslagerungsvorgängen ausgelegt ist. Durch entsprechende Auslegung der Steuerungseinrichtung, insbesondere einer zugehörigen Steuerungssoftware, können entsprechend den jeweiligen Anforderungen unterschiedliche Optimierungsaufgaben ausgeführt werden, was insbesondere im Zusammenhang mit der bei der Einlagerung von Wellpappe-Stückguteinheiten auftretenden Anforderungen von Vorteil ist.

Eine Weiterbildung der vorgenannten Ausführungsform sieht vor, daß die Steuerungseinrichtung die Ein-und Auslagerungsvorgänge im Hinblick auf eine Minimierung der Lagerfläche und/oder des Lagerraumes und/oder in Bezug auf die Lagerleistung ausführt. Eine Minimierung der Lagerfläche und/oder des Lagerraumes kann hierbei bezogen auf die gesamte Regalanordnung ausgeführt werden. Es kann jedoch auch ausschließlich eine auf einzelne Teilbereiche der Regalanordnung bezogene Teiloptimierung ausgeführt werden. Erfindungsgemäß ist es ferner möglich, unterschiedliche Optimierungskriterien zeitlich aufeinanderfolgend heranzuziehen oder zu kombinieren, beispielsweise eine Optimierung sowohl im Hinblick auf den verwendeten Lagerraum als auch auf die Lagerleistung auszuführen.

Unter einer übergeordneten Steuerungseinrichtung wird erfindungsgemäß eine Steuerungseinrichtung verstanden, die beispielsweise die Funktion eines Lagerleitrechners ausführt und in diesem Zusammenhang sämtliche Regalförderzeuge fördertechnische Aggregate und anderer Komponenten der Lageranordnung zur Durchführung von Ein- und Auslagerungsvorgängen ansteuert. Unter einer Steuerungseinheit wird erfindungsgemäß diejenige Steuerung verstanden, die die einem Regalförderzeug zugeordneten Kanalfahrzeuge ansteuert. Erfindungsgemäß kann hierbei die übergeordnete Steuerungseinrichtung die Steuereinheiten bilden. Die Steuerungseinheiten können jedoch auch als separate Steuerungen ausgestaltet sein.

Eine andere vorteilhafte Weiterbildung der Erfindung sieht vor, daß die übergeordnete Steuerungseinrichtung derart ausgebildet ist, daß in wenigstens einem Teilbereich der Lageranordnung eine erste in einem Regalfach eingelagerte Ladeeinheit ein Platzraster für entlang der Tiefenausdehnung des Regalfaches einzulagernde weitere Ladeeinheiten definiert. Bei dieser Ausführungsform werden Ladeeinheiten, die sich beispielsweise hinsichtlich ihrer Größe und Zusammensetzung gleichen, entlang der Tiefenausdehnung des Regalfaches hintereinander eingelagert. Die erste in dem Regalfach eingelagerte Lagereinheit definiert das entsprechende Platzraster.

Eine andere vorteilhafte Weiterbildung der Erfindung sieht vor, daß die übergeordnete Steuerungseinrichtung für eine wenigstens in Teilbereichen der Lageranordnung entlang wenigstens einer Ausdehnung des jeweiligen Regalfaches platzrasterfreie Einlagerung unterschiedlicher Ladeeinheiten ausgestaltet ist. Auf diese Weise ist die Flexibilität bei der Einlagerung von Ladeeinheiten wesentlich erhöht, weil in zumindest einer Ausdehnung entlang der Fläche des jeweiligen Regalfaches ohne festes Platzraster eingelagert werden kann.

Eine vorteilhafte Weiterbildung der vorgenannten Ausführungsform sieht vor, daß die Steuerungseinrichtung für eine entlang der Breitenausdehnung des Regalfaches platzrasterfreie Einlagerung ausgebildet ist. Sind beispielsweise in einem Regalfach entlang seiner Breitenausdehnung nebeneinander fünf Stückguteinheiten gelagert, die sich zusammen über die gesamte Breite des Regalfaches erstrecken, so kann dahinter eine einzige Stückguteinheit eingelagert sein, die sich in ihrer Breite über die gesamte Breitenausdehnung des Regalfaches erstreckt.

Die auf diese Weise erhöhte Flexibilität bei der Einlagerung läßt sich dadurch noch erhöhen, daß die Steuerungseinrichtung für eine entlang der Tiefenausdehnung der Kanäle platzrasterfreie Einlagerung ausgebildet ist. Bei dieser Ausführungsform kann auch entlang der Tiefenausdehnung der Kanäle ohne Platzraster eingelagert werden, so daß sich eine besonders hohe Flexibilität ergibt.

Eine andere vorteilhafte Weiterbildung der Erfindung sieht vor, daß die Steuerungseinrichtung derart ausgestaltet ist, daß wenigstens zwei von den Kanalfahrzeugen eines Regalförderzeuges aufgenommene Stückguteinheiten in unterschiedliche Regalfächer einlagerbar sind und/oder daß die Kanalfahrzeuge eines Regalförderzeuges Stückguteinheiten aus unterschiedlichen Regalfächern auslagern. Bei dieser Ausführungsform kann das jeweilige Regalförderzeug eine sogenannte "Sammelfahrt" ausführen, in deren Verlauf es zunächst mittels eines Kanalfahrzeuges eine Stückguteinheit an einem Lagerplatz in einem Regalfach einlagert. Mittels des oder eines anderen Kanalfahrzeuges wird eine andere Stückguteinheit in einem anderen Regalfach eingelagert. Diese Einlagerungsvorgänge können zeitgleich erfolgen, wenn sie sich auf in der Regalanordnung unmittelbar nebeneinander liegende Regalfächer beziehen. Zwischen den Einlagerungsvorgängen kann das Regalförderzeug jedoch auch verfahren werden, wenn die betreffenden Regalfächer räumlich zueinander beabstandet sind. Entsprechendes gilt auch für Auslagerungsvorgänge.

Eine andere vorteilhafte Weiterbildung der Erfindung sieht vor, daß wenigstens ein Regal zwischen zwei Regalgassen angeordnet ist, daß jeder der Regalgassen wenigstens ein Regalförderzeug zugeordnet ist und daß vorzugsweise die Einlagerung von Stückguteinheiten an Lagerplätzen des Regales mit dem oder den der einen Regalgasse zugeordneten Regalförderzeug bzw. Regalförderzeugen erfolgt und die Auslagerung mitttels dem oder den der anderen Regalgasse zugeordneten Regalförderzeug bzw. Regalförderzeugen erfolgt.

Ein erfindungsgemäßes Wellpappe-Lager ist im Anspruch 13 angegeben. Es weist eine Lageranordnung nach einem der Ansprüche 1 bis 13 auf.

Die Erfindung ist nicht nur zur Einlagerung von Wellpappe-Stückguteinheiten, sondern auch zur Einlagerung beliebiger anderer Stückguteinheiten bzw. Stückgüter, sowohl palettiert als auch palettenlos, geeignet.

Form, Anzahl und Ausgestaltung des Kanalfahrzeuges oder der Kanalfahrzeuge sind entsprechend den jeweiligen Anforderungen wählbar. Insbesondere kann ein Kanalfahrzeug verwendet werden, wie es in der EP 0 151 742 B1 beschrieben ist.

Anstelle eines (zweichachsig verfahrbaren) Regalförderzeuges können erfindungsgemäß auch andere ein-oder mehrachsig verfahrbare Flurförderzeuge bzw. für die Ein- und Auslagerung von Stückgütern vorgesehene Verfahreinheiten vorgesehen sein. Erfindungsgemäß können auch beliebige geeignete Kombinationen entsprechender Flurförderzeuge bzw. Verfahreinheiten vorgesehen sein, beispielsweise eine Kombination eines horizontal verfahrbaren Verfahrwagens mit einem Senkrechtförderer. Als Verfahrwagen können beispielsweise und insbesondere auch sogenannte Quertransportwagen verwendet werden.

Die Erfindung wird nachfolgend anhand der beigefügten stark schematisierten Zeichnung näher erläutert, in der ein Ausführungsbeispiel einer erfindungsgemäßen Lageranordnung in Form eines Wellpappe-Lagers dargestellt ist.

Es zeigt:
- Fig. 1: einen Grundriß eines Ausführungsbeispieles einer erfindungsgemäßen Lageranordnung,
- Fig. 2A: stark schematisiert ein Regalförderzeug der Lageranordnung gemäß Fig. 1, wobei das Regalförderzeug drei Kanalfahrzeuge aufweist, die in Fig. 2A auf dem Regalförderzeug angeordnet sind,
- Fig. 2B: in gleicher Darstellung wie Fig. 2A das Regalförderzeug gemäß Fig. 2A, wobei sich die Kanalfahrzeuge in Lastaufnahmeposition befinden,
- Fig. 3: stark schematisiert einen Grundriß eines Regalfaches in einer ersten Belegungskonstellation seiner Lagerplätze,
- Fig. 4: in gleicher Darstellung wie Fig. 3 das Regalfach gemäß Fig. 3 in einer zweiten Belegungskonstellation der Lagerplätze,
- Fig. 5: in gleicher Darstellung wie Fig. 3 das Regalfach gemäß Fig. 3 in einer dritten Belegungskonstellation der Lagerplätze und
- Fig. 6: in gleicher Darstellung wie Fig. 3 das Regalfach gemäß Fig. 3 in einer vierten Belegungskonstellation der Lagerplätze.

In den Figuren der Zeichnung sind gleiche bzw. sich entsprechende Bauteile mit den gleichen Bezugszeichen versehen.

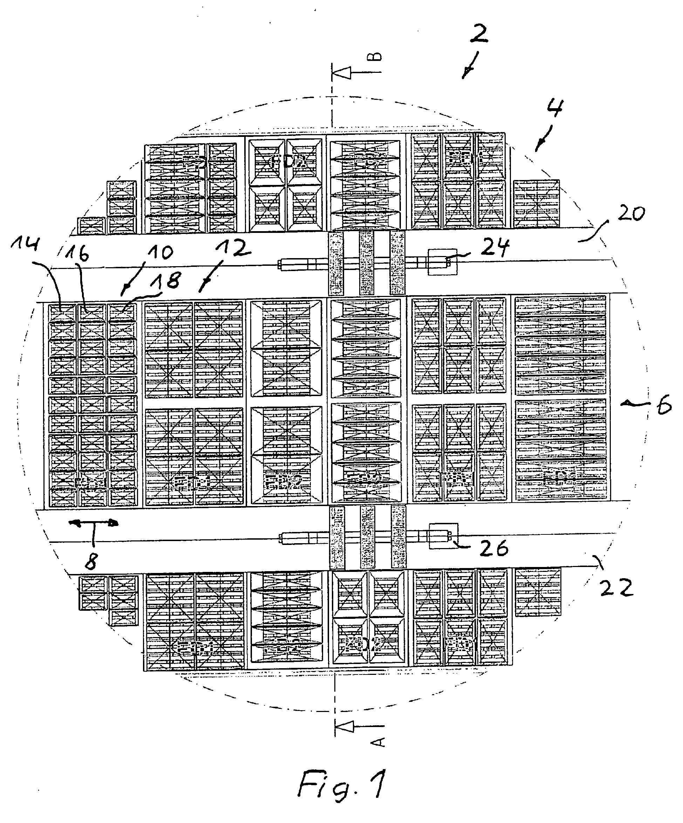

In Fig. 1 ist ein Ausführungsbeispiel einer erfindungsgemäßen Lageranordnung 2 in Form eines Wellpappe-Lagers für Wellpappe-Stückguteinheiten dargestellt, die eine Regalanordnung 4 aufweist, an der Lagerplätze zur Einlagerung der Stückguteinheiten gebildet sind. Lediglich beispielshalber ist in Fig. 1 ein Regal mit dem Bezugszeichen 6 versehen. Bei dem dargestellten Ausführungsbeispiel ist das Regal 6 entlang seiner Breitenausdehnung 8 in eine Mehrzahl von Regalfächern unterteilt, von denen in Fig. 1 lediglich zwei Regalfächer mit den Bezugszeichen 10, 12 bezeichnet sind. Bei dem dargestellten Ausführungsbeispiel ist das Regalfach 10 entlang seiner Breitenausdehnung in eine Mehrzahl von Kanälen 14, 16, 18 unterteilt, wobei in jedem der Kanäle 14, 16, 18 Stückguteinheiten hintereinander eingelagert werden können. Die Lageranordnung 2 ist somit für eine mehrfachtiefe Lagerung ausgestaltet.

Bei dem dargestellten Ausführungsbeispiel ist das Regal 6 zwischen zwei Regalgassen 20, 22 angeordnet. Zur Durchführung von Ein- bzw. Auslagerungsvorgängen an bzw. von Lagerplätzen der Regalanordnung 4 sind bei diesem Ausführungsbeispiel zwei Regalförderzeuge 24, 26 vorgesehen, von denen das Regalförderzeug 24 der Regalgasse 20 und das Regalförderzeug 26 der Regalgasse 22 zugeordnet ist. Der Aufbau entsprechender Regalförderzeuge, die flurgebunden, beispielsweise schienengebunden, oder flurfrei ausgestaltet sein können, ist dem Fachmann allgemein bekannt und wird daher hier nicht näher erläutert. Erfindungsgemäß weisen die Regalförderzeuge 24, 26 bei dem dargestellten Ausführungsbeispiel wenigstens zwei Kanalfahrzeuge auf.

Fördertechnische Aggregate, mittels derer die Stückguteinheiten zu den Regalförderzeugen 24, 26 hin bzw. von den Regalförderzeugen 24, 26 weg gefördert werden, sind der Übersichtlichkeit halber in der Zeichnung nicht dargestellt. Das gleiche gilt für Aggregate, mittels derer die Stückguteinheiten zwischen zu- bzw. abfördernden fördertechnischen Aggregaten und den Regalförderzeugen 24, 26 übergeben werden.

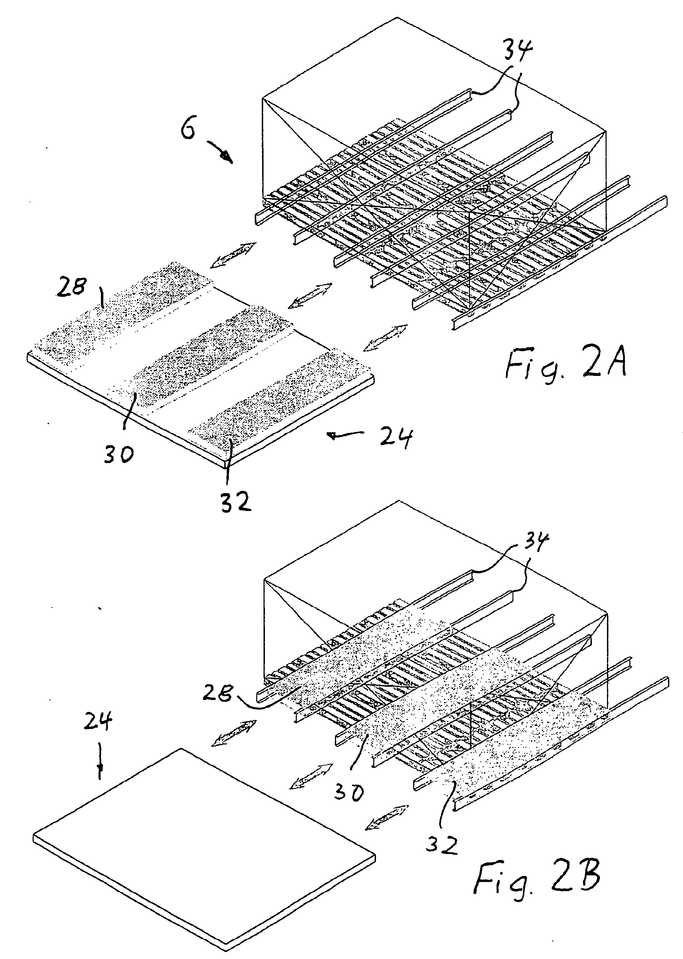

Fig. 2A zeigt stark schematisiert das Regalförderzeug 24, das bei dem dargestellten Ausführungsbeispiel eine Mehrzahl von durch eine Steuerungseinheit unabhängig voneinander ansteuerbaren Kanalfahrzeugen aufweist. Bei dem dargestellten Ausführungsbeispiel sind rein exemplarisch und symbolisch drei Kanalfahrzeuge 28, 30, 32 dargestellt. Bei den Kanalfahrzeugen 28, 30, 32 handelt es sich in dem Fachmann bekannter Weise um Verfahreinheiten, die über in dem Regal 6 vorgesehene Schienenanordnungen durch eine Steuerungseinheit gesteuert selbsttätig in das Regal 6 einfahren können. In Fig. 2A ist lediglich beispielshalber eine dem Kanalfahrzeug 28 zugeordnete Schienenanordnung mit dem Bezugszeichen 34 versehen. Aufbau und Funktionsweise eines entsprechenden Kanalfahrzeuges sind dem Fachmann allgemein bekannt und werden daher hier nicht näher erläutert.

Fig. 2B zeigt die Kanalfahrzeuge 28, 30, 32 in ihrer Lastaufnahmeposition, in der sie in das Regal 6 eingefahren sind und beispielsweise über einen geeigneten Hubmechanismus Stückguteinheiten aufnehmen können.

Die Steuerungseinheit ist derart ausgestaltet, daß wenigstens zwei Kanalfahrzeuge steuerungstechnisch zusammenfaßbar sind zur Durchführung von Ein- bzw. Auslagerungsvorgängen, wobei sich steuerungstechnisch zusammengefaßte Kanalfahrzeuge beim Einfahren in einen bzw. Ausfahren aus einem Kanal synchron oder im wesentlichen synchron bewegen.

Bei dem dargestellten Ausführungsbeispiel können also die Kanalfahrzeuge 28, 30, 32 getrennt voneinander in die zugeordneten Kanäle des Regales 6 einfahren. Nach dem Einfahren kann jedes der Kanalfahrzeuge 28, 30, 32 unabhängig von den anderen Kanalfahrzeugen eine Stückguteinheit aufnehmen. Die Breite der aufnehmbaren Stückguteinheit entspricht dabei einer maximalen Ladebreite des Kanalfahrzeuges 28, 30, 32 in Richtung quer zu den Kanälen. Durch steuerungstechnische Zusammenfassung von wenigstens zwei Kanalfahrzeugen können auch Stückguteinheiten größerer Breite aufgenommen werden. Werden beispielsweise die Kanalfahrzeuge 28, 30 steuerungstechnisch zusammengefaßt, so daß sie sich bei Ein-und Auslagerungsvorgängen synchron bewegen, so verdoppelt sich in etwa die Breite der breitesten aufzunehmenden Stückguteinheit. Werden alle drei Kanalfahrzeuge 28, 30, 32 steuerungstechnisch zusammengefaßt, so verdreifacht sich in etwa die Breite der auf diese Weise aufnehmbaren breitesten Stückguteinheit. Durch entsprechende steuerungstechnische Zusammenfassung der Kanalfahrzeuge 28, 30, 32 ergibt sich hinsichtlich der Ein-und Auslagerung eine hohe Flexibilität sowie eine hohe Lagerleistung.

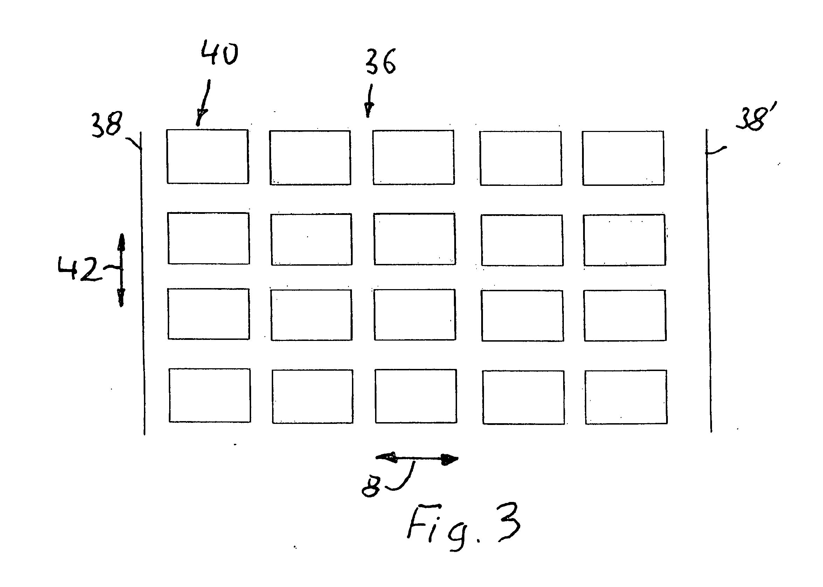

Fig. 3 stellt stark schematisiert einen Grundriß eines Regalfaches 36 des Regales 6 dar. Seitliche Begrenzungen des Regalfaches 36 sind in Fig. 3 durch Linien 38, 38' symbolisiert. Das Regalfach 36 weist eine Lagerfläche auf, an der Lagerplätze für Stückguteinheiten gebildet sind, von denen in Fig. 3 lediglich beispielshalber eine Stückguteinheit mit dem Bezugszeichen 40 versehen ist.

Fig. 3 zeigt eine Belegungskonstellation, in der die Stückguteinheiten 40 entlang der Breitenausdehnung 8 des Regalfaches 36 sowie entlang der Tiefenausdehnung 42 in einem festen Raster nach Art einer Matrix gelagert sind.

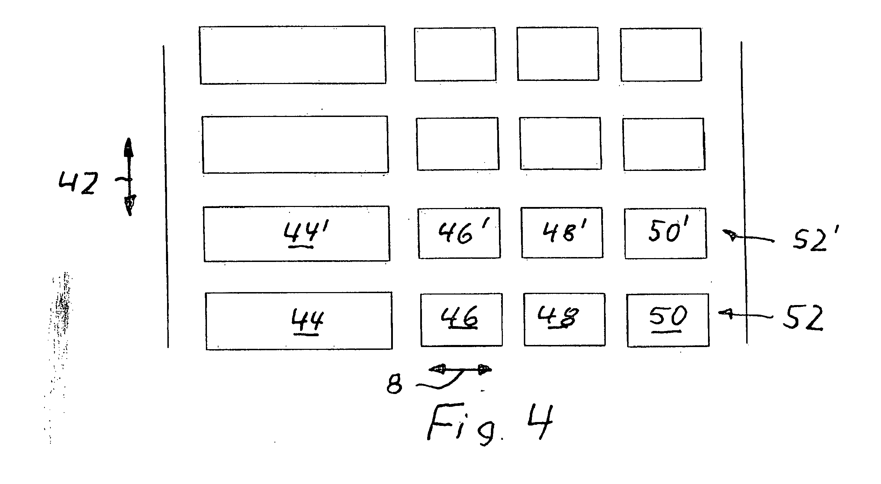

Fig. 4 stellt eine von Fig. 3 abweichende Belegungskonstellation dar. Erfindungsgemäß ist bei dem dargestellten Ausführungsbeispiel die Steuerungseinrichtung derart ausgestaltet, daß in wenigstens einem Teilbereich der Lageranordnung 2 eine erste in einem Regalfach eingelagerte Ladeeinheit ein Platzraster für entlang der Tiefenausdehnung des Regalfaches einzulagernde weitere Ladeeinheiten definiert. Bei dem dargestellten Ausführungsbeispiel bilden entlang der Breitenausdehnung des Regalfaches nebeneinander angeordnete Stückguteinheiten 44, 46, 48, 50 eine Ladeeinheit 52. Diese Ladeeinheit 52 definiert ein Platzraster für entlang der Tiefenausdehnung 42 des Regalfaches einzulagernde weitere Ladeeinheiten. Dies bedeutet, daß entlang der Tiefenausdehnung 42 des Regalfaches hinter der Ladeeinheit 52 eine hinsichtlich ihrer Stückguteinheiten 44', 46', 48', 50' entsprechend aufgebaute Ladeeinheit 52' folgt.

In Abwandlung und Erweiterung dieses Lagerungsprinzips ist die Steuerungseinrichtung bei dem dargestellten Ausführungsbeispiel für eine wenigstens in Teilbereichen der Lageranordnung 2 entlang wenigstens einer Ausdehnung des jeweiligen Regalfaches 36 platzrasterfreie Einlagerung unterschiedlicher Ladeeinheiten ausgstaltet.

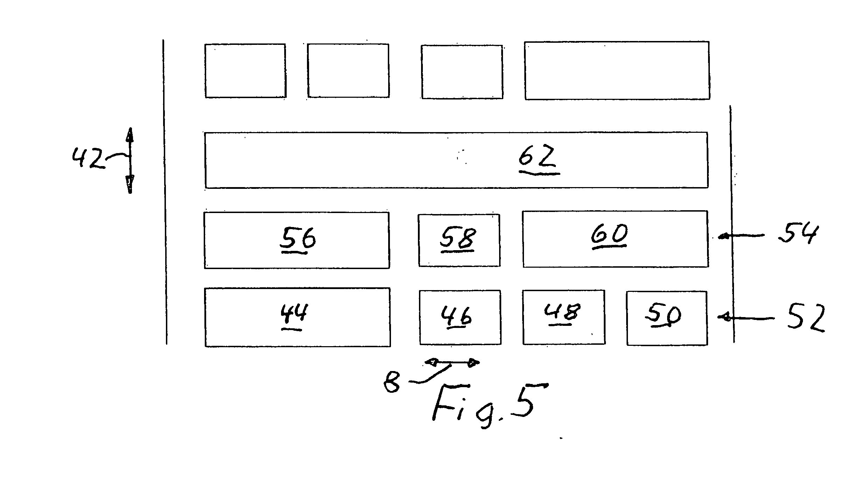

Fig. 5 verdeutlicht eine solche entlang der Breitenausdehnung 8 des Regalfaches 36 platzrasterfreie Einlagerung, bei der entlang der Tiefenausdehnung 42 des Regalfaches auf die Ladeeinheit 52 eine anders zusammengesetzte Ladeeinheit 54 folgt, die aus Stückguteinheiten 56, 58, 60 besteht. Bei der in Fig. 5 dargestellten Belegungskonstellation wird zwar entlang der Breitenausdehnung 8 des Regalfaches platzrasterfrei eingelagert. Entlang der Tiefenausdehnung 42 besteht jedoch noch ein Platzraster.

Um die Flexibilität bei der Einlagerung, insbesondere im Hinblick auf eine Lagerraum- oder -platzoptimierung weiter zu erhöhen, ist bei dem dargestellten Ausführungsbeispiel die Steuerungseinrichtung durch für eine entlang der Tiefenausdehnung 42 des Regalfaches 36 bzw. seiner Kanäle platzrasterfreie Einlagerung ausgebildet.

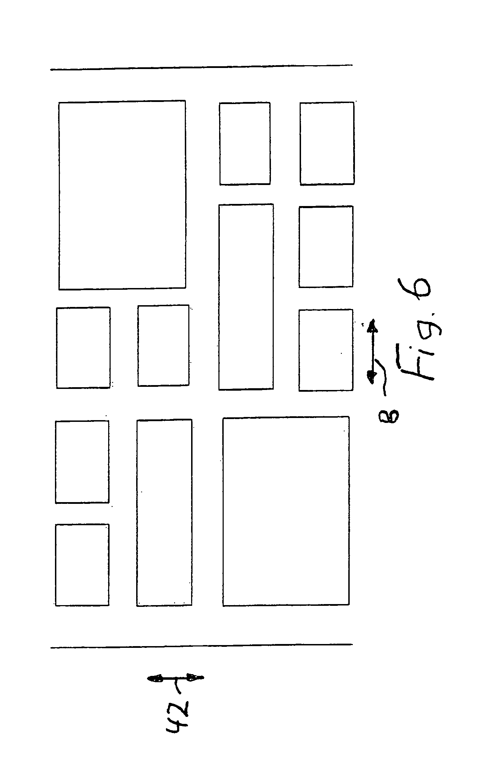

Fig. 6 zeigt eine entsprechende Belegungskonstellation, wobei ersichtlich ist, daß sowohl entlang der Breitenausdehnung 8 als auch entlang der Tiefenausdehnung 42 platzrasterfrei eingelagert werden kann. Auf diese Weise ergibt sich eine besonders hohe Flexibilität.

Die erforderlichen Ein- und Auslagerungsvorgänge werden mithilfe der jeweiligen Kanalfahrzeuge 28, 30, 32 ausgeführt, die entsprechend den jeweiligen Anforderungen pro Ein- bzw. Auslagerungsvorgang steuerungstechnisch zusammengefaßt werden können. Die steuerungstechnische Zusammenfassung der Kanalfahrzeuge 28, 30, 32 erfolgt also dynamisch. Bei den in den Figuren 3 bis 6 dargestellten Lagerkonstellationen können beispielsweise fünf entlang der Breitenausdehnung 8 des Regalfaches zueinander versetzt angeordnete Kanalfahrzeuge vorgesehen sein. Um beispielsweise die in Fig. 5 dargestellte Stückguteinheit 62 zu entnehmen, werden sämtliche fünf Kanalfahrzeuge steuerungstechnisch zusammengefaßt. Zur Entnahme der Stückguteinheiten 56, 60 werden jeweils zwei Kanalfahrzeuge steuerungstechnisch zusammengefaßt, während die Stückguteinheiten 58 mittels eines einzigen Kanalfahrzeuges entnommen werden können.

Die in den Figuren 3 bis 6 dargestellten Belegungskonstellationen sind lediglich exemplarisch dargestellt. Die sich im Betrieb der Lageranordnung 2 jeweils dynamisch ergebende Belegungskonstellation hängt von den bei der Lagerung herangezogenen Optimierungskriterien sowie den jeweils einzulagernden Stückguteinheiten ab.

## Patentansprüche

1. Lageranordnung (2) für Wellpappe-Stückguteinheiten,
mit einer Regalanordnung (4), an der Lagerplätze zur Einlagerung der Stückguteinheiten (40) gebildet sind, und
mit wenigstens einem Regalförderzeug (24, 26) zur Durchführung von Ein- und Auslagerungsvorgängen,
wobei an wenigstens einem Regalförderzeug wenigstens zwei durch eine Steuerungseinheit unabhängig voneinander ansteuerbare Kanalfahrzeuge angeordnet sind,
wobei die Regalanordnung als Hochregallager ausgebildet ist und
daß die Steuerungseinheit derart ausgestaltet ist, daß wenigstens zwei Kanalfahrzeuge (28, 30, 32) steuerungstechnisch zusammenfassbar sind zur Durchführung von Ein- bzw. Auslagerungsvorgängen und
daß sich steuerungstechnisch zusammengefaßte Kanalfahxzeuge (28, 30, 32) beim Einfahren in einen oder Ausfahren aus einem Kanal synchron oder im wesentlichen synchron bewegen.

2. Lageranordnung nach Anspruch 1, **dadurch gekennzeichnet, daß** die Lageranordnung (2) für eine mehrfachtiefe Lagerung ausgestaltet ist.

3. Lageranordnung nach Anspruch 1 oder 2, **dadurch gekennzeichnet, daß** jedes oder wenigstens ein Regal (6) entlang seiner Breitenausdehnung (8) in eine Mehrzahl von Regalfächern (10, 12) unterteilt ist.

4. Lageranordnung nach einem der vorhergehenden Insprüche, **dadurch gekennzeichnet, daß** wenigstens ein Teil (10) der Regalfächer entlang seiner Breitenausdehnung in eine Mehrzahl von Kanälen (14, 16, 18) unterteilt ist.

5. Lageranordnung nach einem der vorhergehenden Ansprüche, **gekennzeichnet durch** eine übergeordnete Steuerungseinrichtung, die für eine die gesamte Lageranordnung (2) oder wenigstens Teilbereiche davon erfassende Optimierung der Steuerung von Ein- und Auslagerungsvorgängen ausgelegt ist.

6. Lageranordnung nach Anspruch 5, **dadurch gekennzeichnet, daß** die übergeordnete Steuerungseinrichtung die Ein- und Auslagerungsvorgänge im Hinblick auf eine Minimierung der Lagerfläche und/oder des Lagerraumes und/oder in Bezug auf eine Optimierung der Lagerleistung ausführt.

7. Lageranordnung nach einem der vorhergehenden Ansprüche, **dadurch gekennzeichnet, daß** die übergeordnete Steuerungseinrichtung derart ausgestaltet ist, daß in wenigstens einem Teilbereich der Lageranordnung (2) eine erste in einem Regalfach eingelagerte Ladeeinheit (52) ein Platzraster für entlang der Tiefenausdehnung des Regalfaches einzulagernde weitere Ladeeinheiten definiert.

8. Lageranordnung nach einem der vorhergehenden Ansprüche, **dadurch gekennzeichnet, daß** die übergeordnete Steuerungseinrichtung für eine wenigstens in Teilbereichen der Lageranordnung (2) entlang wenigstens,einer Ausdehnung des jeweiligen Regalfaches platzrasterfreie Einlagerung unterschiedlicher Ladeeinheiten ausgestaltet ist.

9. Lageranordnung nach Anspruch 8, **dadurch gekennzeichnet, daß** die Steuerungseinrichtung für eine entlang der Breitenausdehnung des Regalfaches platzrasterfreie Einlagerung ausgebildet ist.

10. Lageranordnung nach Anspruch 8 oder 9, **dadurch gekennzeichnet, daß** die Steuerungseinrichtung für eine entlang der Tiefenausdehnung der Kanäle platzrasterfreie Einlagerung ausgebildet ist.

11. Lageranordnung nach einem der vorhergehenden Ansprüche, **dadurch gekennzeichnet, daß** die Steuerungseinrichtung derart ausgestaltet ist, daß wenigstens zwei von den Kanalfahrzeugen eines Regalförderzeuges aufgenommene Stückguteinheiten in unterschiedliche Regalfächer einlagerbar sind und/oder daß die Kanalfahrzeuge eines Regalförderzeuges Stückguteinheiten aus unterschiedlichen Regalfächern auslagern.

12. Lageranordnung nach einem der vorhergehenden Ansprüche, **dadurch gekennzeichnet, daß** wenigstens ein Regal (6) zwischen zwei Regalgassen (20, 22) angeordnet ist, daß jeder der Regalgassen (20, 22) wenigstens ein Regalförderzeug (24, 26) zugeordnet ist und daß vorzugsweise die Einlagerung von Stückguteinheiten an Lagerplätzen des Regales mit dem oder den der einen Regalgasse (20) zugeordneten Regalförderzeug (24) oder Regalförderzeugen erfolgt und die Auslagerung mittels dem oder den der anderen Regalgasse (22) zugeordneten Regalförderzeug (26) bzw. Regalförderzeuqen erfolgt.

13. Wellpappe-Lager, **dadurch gekennzeichnet, daß** es eine Lageranordnung nach einem der Ansprüche 1 bis 12 aufweist.

## Claims

1. Storage arrangement (2) for corrugated cardboard piece goods units, with a shelf arrangement (4), on which storage places for storing the piece goods units (40) are formed, and with at least one shelf conveyor (24, 26) for carrying out storage and retrieval processes, wherein at least two channel vehicles, which can be activated independently of one another by a control unit, are arranged on at least one shelf conveyor, wherein the shelf arrangement is configured as a high-shelf store and in that the control unit is configured in such a way that at least two channel vehicles (28, 30, 32) can be combined in terms of control to carry out storage or retrieval processes and in that channel vehicles (28, 30, 32), which are combined in terms of control, move synchronously or substantially synchronously when moving into or out of a channel.

2. Storage arrangement according to claim 1, **characterised in that** the storage arrangement (2) is configured for multiple-depth storage.

3. Storage arrangement according to claim 1 or 2, **characterised in that** each or at least one shelf (6) is divided into a plurality of shelf compartments (10, 12) along its width extent (8).

4. Storage arrangement according to any one of the preceding claims, **characterised in that** at least some (10) of the shelf compartments are divided into a plurality of channels (14, 16, 18) along the width extent thereof.

5. Storage arrangement according to any one of the preceding claims, **characterised by** a superordinate control device, which is configured for an optimisation of the control of storage and retrieval processes including the entire storage arrangement (2) or at least part regions thereof.

6. Storage arrangement according to claim 5, **characterised in that** the superordinate control device carries out the storage and retrieval processes with regard to a minimization of the storage area and/or the storage space and/or in relation to an optimisation of the storage performance.

7. Storage arrangement according to any one of the preceding claims, **characterised in that** the superordinate control device is configured in such a way that, in at least one part region of the storage arrangement (2), a first load unit (52) stored in a shelf compartment defines a place grid for further load units to be stored along the depth extent of the shelf compartment.

8. Storage arrangement according to any one of the preceding claims, **characterised in that** the superordinate control device is configured for place grid-free storage of different load units at least in part regions of the storage arrangement (2) along at least one extent of the respective shelf compartment.

9. Storage arrangement according to claim 8, **characterised in that** the control device is configured for place grid-free storage along the width extent of the shelf compartment.

10. Storage arrangement according to claim 8 or 9, **characterised in that** the control device is configured for place grid-free storage along the depth extent of the channels.

11. Storage arrangement according to any one of the preceding claims, **characterised in that** the control device is configured in such a way that at least two piece goods units received by the channel vehicles of a shelf conveyor can be stored in different shelf compartments and/or **in that** the channel vehicles of a shelf conveyor retrieve piece goods units from different shelf compartments.

12. Storage arrangement according to any one of the preceding claims, **characterised in that** at least one shelf (6) is arranged between two shelf aisles (20, 22), **in that** at least one shelf conveyor (24, 26) is associated with each of the shelf aisles (20, 22) and **in that** the storage of piece goods units at storage places of the shelf preferably takes place with the shelf conveyor (24) or shelf conveyors associated with the one shelf aisle (20) and the retrieval takes place by means of the shelf conveyor (26) or shelf conveyors associated with the other shelf aisle (22).

13. Corrugated cardboard store, **characterised in that** it has a storage arrangement according to any one of claims 1 to 12.

## Revendications

1. Dispositif de stockage (2) pour des unités de marchandises en carton ondulé,
avec un dispositif à étagères (4), sur lequel sont réalisés des emplacements de stockage pour le stockage des unités de marchandises (40) et
avec au moins un dispositif de convoyage à étagère (24, 26) pour l'exécution de processus d'entrée et de sortie,
au moins deux véhicules à canaux pouvant être commandes indépendamment l'un de l'autre par une unité de commande étant disposés au niveau d'au moins un dispositif de convoyage à étagères,
le dispositif à étagères étant conçu comme un stockage à étagères hautes et l'unité de commande étant conçue de façon à ce qu'au moins deux véhicules à canaux (28, 30, 32) puissent être regroupés du point de vue de la commande pour l'exécution de processus d'entrée et de sortie et
les véhicules à canaux (28, 30, 32) regroupés du point de vue de la commande se déplacent de manière synchrone ou globalement synchrone lors de l'entrée ou de la sortie d'un canal.

2. Dispositif de stockage selon la revendication 1, **caractérisé en ce que** le dispositif de stockage (2) est conçu pour un stockage en profondeur.

3. Dispositif de stockage selon la revendication 1 ou 2, **caractérisé en ce que** chaque étagère ou au moins une étagère (6) est divisée, le long de sa largeur (8), en une pluralité de compartiments d'étagères (10, 12).

4. Dispositif de stockage selon l'une des revendications précédentes, **caractérisé en ce qu'**au moins une partie (10) des compartiments d'étagères est divisée le long de sa largeur en une pluralité de canaux (14, 16, 18).

5. Dispositif de stockage selon l'une des revendications précédentes, **caractérisé par** un dispositif de commande principal conçu pour une optimisation, concernant l'ensemble du dispositif de stockage (2) ou au moins des parties de celui-ci, de la commande des processus d'entrée et de sortie.

6. Dispositif de stockage selon la revendication 5, **caractérisé en ce que** le dispositif de commande principal exécute les processus d'entrée et de sortie en vue d'une réduction de la surface de stockage et/ou de l'espace de stockage et/ou d'une optimisation de la performance de stockage.

7. Dispositif de stockage selon l'une des revendications précédentes, **caractérisé en ce que** le dispositif de stockage principal est conçu de façon à ce que, dans au moins une partie du dispositif de stockage (2), une première unité de chargement (52) intégrée dans le compartiment d'étagère définit une trame d'emplacements pour des unités de chargement supplémentaires à intégrer le long de la profondeur du compartiment d'étagère.

8. Dispositif de stockage selon l'une des revendications précédentes, **caractérisé en ce que** le dispositif de commande principal est conçu pour un stockage, sans trame d'emplacements, de différentes unités de chargement au moins dans des parties du dispositif de stockage (2) le long d'au moins une extension du compartiment d'étagère correspondant.

9. Dispositif de stockage selon la revendication 8, **caractérisé en ce que** le dispositif de commande est conçu pour un stockage sans trame d'emplacement le long de la largeur du compartiment à étagères.

10. Dispositif de stockage selon la revendication 8 ou 9, **caractérisé en ce que** le dispositif de commande est conçu pour un stockage sans trame d'emplacements le long de la profondeur des canaux.

11. Dispositif de stockage selon l'une des revendications précédentes, **caractérisé en ce que** le dispositif de commande est conçu de façon à ce qu'au moins deux unités de marchandises logées par les véhicules à canaux d'un dispositif de convoyage à étagères peuvent être stockées dans des compartiments à étagères différents et/ou les véhicules à canaux d'un dispositif de convoyage à étagères sortent les unités de marchandises de différents compartiments à étagères.

12. Dispositif de stockage selon l'une des revendications précédentes, **caractérisé en ce qu'**au moins une étagère (6) est disposée entre deux rayonnages (20, 22), **en ce qu'**à chaque rayonnage (20, 22) correspond au moins un dispositif de convoyage à étagères (24, 26) et **en ce que**, de prêférence, le stockage d'unités de marchandises à des emplacements de stockage de l'étagère a lieu à l'aide du dispositif de convoyage à étagères (24) ou des dispositifs de convoyage à étagères correspondant au rayonnage ou à l'un des rayonnages (20) ou la sortie a lieu à l'aide à l'aide du dispositif de convoyage à étagères (26) ou des dispositifs de convoyage à étagères correspondant au rayonnage ou à l'autre rayonnage (22).

13. Stockage à carton ondulé, **caractérisé en ce qu'**il comprend un dispositif de stockage selon l'une des revendications 1 à 12.
